# FASCICULE DE BREVET EUROPEEN

(11) **EP 1 327 793 B1**
(45) Date de publication et mention de la délivrance du brevet: **29.03.2006**
(21) Numéro de dépôt: 03290038.3
(22) Date de dépôt: 08.01.2003
(51) Int. Cl.: F16F 9/512

(54) **Amortisseur hydraulique à compensation adaptable**
Hydraulischer Dämpfer mit verstellbarer Kompensation
Hydraulic damper with adjustable compensation

(30) Priorité: 10.01.2002 FR 0200249
(43) Date de publication de la demande: 16.07.2003
(73) Titulaire: Peugeot Citroen Automobiles SA, 92200 Neuilly sur Seine (FR)
(72) Inventeur: Vacheresse, Michel, 25200 Montbeliard (FR)
(74) Mandataire: Robert, Jean-François

(56) Documents cités:
- EP-A- 0 229 310
- DE-A- 3 823 840
- FR-A- 2 301 737
- FR-A- 2 664 008
- GB-A- 2 196 092
- GB-A- 2 284 035
- US-A- 4 159 106
- US-A- 4 561 524
- US-A- 5 738 191
- PATENT ABSTRACTS OF JAPAN vol. 1998, no. 03, 27 février 1998 (1998-02-27) & JP 09 303471 A (TOKICO LTD), 25 novembre 1997 (1997-11-25)
- PATENT ABSTRACTS OF JAPAN vol. 1998, no. 11, 30 septembre 1998 (1998-09-30) & JP 10 169695 A (YAMAHA MOTOR CO LTD), 23 juin 1998 (1998-06-23)
- PATENT ABSTRACTS OF JAPAN vol. 1998, no. 08, 30 juin 1998 (1998-06-30) & JP 10 061710 A (TOKICO LTD), 6 mars 1998 (1998-03-06)

## Description

L'invention se rapporte à un amortisseur hydraulique comprenant une compensation adaptable.

Pour des soucis de confort de leur production, les constructeurs automobiles tendent à optimiser les amortisseurs en fonction de chaque type de véhicule. Ils tendent également à proposer des suspensions pouvant varier leur loi d'amortissement en fonction des conditions de roulage.

Ainsi d'une part, les réglages des amortisseurs notamment ceux concernant la compensation des différences de volume de la tige sont optimisés pour chaque véhicule et par conséquent nécessite un tarage et mise au point spécifique. Cela entraîne donc beaucoup de moyen de compensation différent.

D'autre part, lesdits réglages doivent prévoir les modifications induites par un changement de loi d'amortissement . Actuellement, pour des suspensions de type pilotées, la solution appliquée est de monter la pression du fluide contenu dans la chambre de compensation pour éviter les désamorçages dus à un changement de loi d'amortissement. Cela a pour inconvénients de rendre plus difficiles et plus chers leur montage mais surtout gêne la poussée de tige desdits amortisseurs qui influe directement sur l'assiette du véhicule en entraînant un écart important des caractéristiques du véhicule entre son état neuf et son état de fin de vie.

Le document JP-A-10169695 montre un amortisseur selon le préambule de la revendication 1.

Le but de la présente invention est de pallier tout ou partie les inconvénients cités précédemment en proposant des moyens de compensation adaptable automatiquement quel que soit l'amortisseur ou la loi d'amortissement dudit amortisseur.

A cet effet, l'invention se rapporte à un amortisseur hydraulique à compensation adaptable comprenant un corps sensiblement cylindrique et fermé à une extrémité, une tige, un piston qui, solidaire d'une extrémité de ladite tige, glisse le long de la surface intérieure dudit corps et sépare l'intérieur dudit corps en deux chambres, des moyens de fermeture dudit corps laissant traverser la tige vers l'extérieur du corps de manière étanche, des moyens d'ouverture sélective entre lesdites deux chambres situés dans le piston et une chambre de compensation qui, reliée à la chambre de compression par un premier canal autorisant, grâce à un clapet anti-retour, le passage d'éléments hydrauliques uniquement de ladite chambre de compensation vers ladite chambre de compression formée entre ledit piston et le fond du corps, sert de réserve d'éléments hydrauliques pour pallier la différence de volume de ladite tige caractérisé en ce qu'il comporte en plus un dispositif d'ouverture réglable piloté à partir de la pression régnant dans la chambre de détente formée entre ledit piston et lesdits moyens de fermeture permettant, lors des phases de détente et de compression, d'équilibrer les compensations en volume de fluide. Les réglages de compensation étant adaptables, un moyen de compensation universel peut être envisagé.

Avantageusement selon l'invention, le dispositif d'ouverture réglable autorise sélectivement la communication entre les chambres de compensation et de compression et comporte un deuxième canal reliant ladite chambre de détente à l'organe de pilotage dudit dispositif d'ouverture réglable permettant d'adapter la compensation pour éviter le désamorçage dudit amortisseur.

Avantageusement selon l'invention, ledit dispositif d'ouverture réglable comporte une pièce rainurée qui, montée sur un ressort solidaire dudit amortisseur, est déplacé suivant la poussée induite par la pression régnant dans ledit deuxième canal de manière à faire correspondre lesdites rainures avec au moins deux conduites débouchant respectivement dans la chambre de compression d'une part et dans la chambre de compensation d'autre part en vue d'utiliser le creux des rainures pour le passage d'éléments hydrauliques entre les deux chambres précédemment citées. Cela permet de fournir un moyen d'ouverture de constitution simple et peu coûteux.

Avantageusement selon l'invention, ledit deuxième canal est formé par un évidement réalisé dans le moyen de fermeture puis dans l'épaisseur du corps jusqu'audit dispositif d'ouverture réglable permettant de réaliser un ensemble monobloc sans élément extérieur audit corps.

D'autres particularités et avantages apparaîtront à la lecture de la description ci-après faite en référence aux figures dans lesquelles :
- la figure 1 est une section d'un amortisseur selon l'invention ;
- la figure 2 est une section partielle et agrandie du haut de l'amortisseur de la figure1 ;
- la figure 3 est une section partielle et agrandie du bas de l'amortisseur de la figure 1, le dispositif de compensation réglable étant actionné ;
- la figure 4 est une section partielle et agrandie du bas de l'amortisseur de la figure 1, le dispositif de compensation réglable étant au repos.

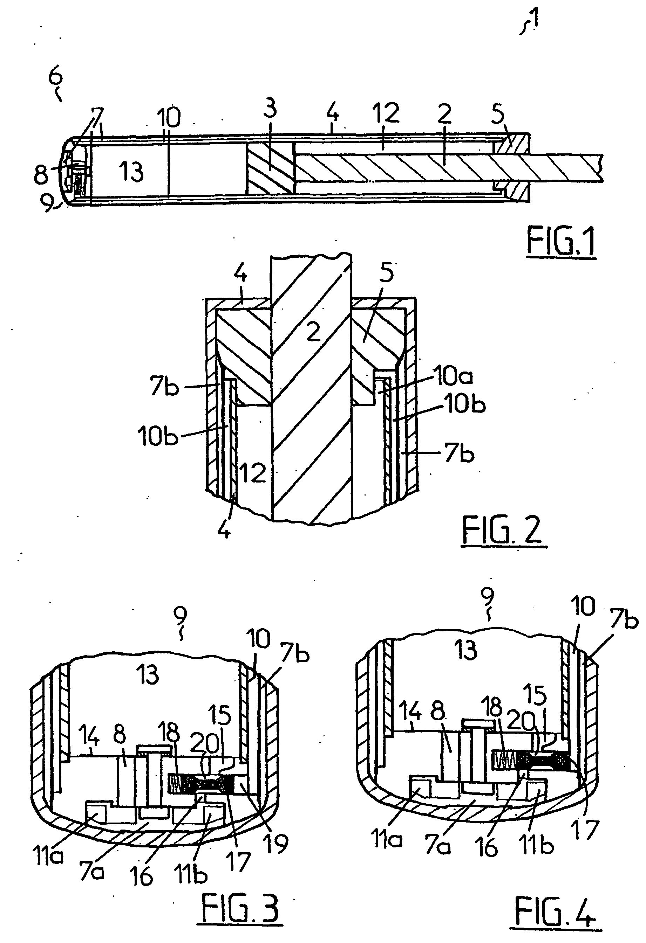

A la figure 1, on peut voir un exemple d'amortisseur hydraulique 1 selon l'invention. Il est principalement composé d'une tige 2, d'un piston 3, d'un corps 4 et d'un bouchon 5. La structure d'un amortisseur étant très connue, tous les éléments visibles sur les figures ne seront pas détaillés ci-après.

Dans l'exemple illustré aux figures 1 à 4, on peut voir à l'extrémité du corps 4, un dispositif de compensation 6. Il est constitué principalement d'une chambre de compensation 7, un premier canal 8 à passage sélectif, un dispositif d'ouverture réglable 9 et un deuxième canal 10.

La chambre de compensation 7 est composée par deux réservoirs 7a, 7b communiquant entre eux par deux entrées symétriques 11a, 11b à l'intérieur du corps 4 de l'amortisseur 1. En effet, pour des questions d'alimentation très connues, le réservoir 7a doit toujours être complètement rempli pour ne pas générer d'air dans l'amortisseur 1. C'est donc dans le réservoir cylindrique 7b que fluctue le niveau de fluide qui est fonction des compensations nécessaires aux différences de volume de tige 2 contenu à l'intérieur du corps 4.

Le piston 3, qui coulisse le long de la surface intérieure du corps 4, forme deux chambres distinctes 12, 13. La première appelée chambre de détente 12 contient la portion de la tige 2 rentrée à l'intérieur de la surface interne du corps 4. La deuxième appelée chambre de compression 13 est situé entre la chambre de compensation 7 et la chambre de détente 12.

Le premier canal 8 permet un sens unique de passage de la chambre de compensation 7 et vers la chambre de compression 13. Le sens unique de passage de fluide est obtenu, dans l'exemple illustré aux figures 3 et 4, grâce à un clapet 14, par exemple en métal, qui est plaqué contre le fond du corps 4. ainsi, quand le piston 3 se déplacera vers le bouchon 5, il provoquera un effet d'aspiration tel que le clapet 14 va se déformer et entrouvrir le canal 8 sur la chambre de compression 13 et ainsi faire communiquer cette dernière avec la chambre de compensation 7. Cette entrouverture est réglée pour compenser le volume de tige 2 étant ressortie du corps 4. Ce réglage est donc fixe.

Dans l'exemple illustré aux figures 3 et 4, on peut voir le dispositif d'ouverture réglable 9. il est composé principalement d'un canal 10, de deux conduites 15, 16, une pièce rainurée 17 et un ressort 18. Il permet suivant les phases de compression (tige 2 rentre dans le corps 4) ou de détente (tige 2 sort du corps 4) d'équilibrer les compensations en volume de fluide à apporter.

Selon l'invention, le dispositif d'ouverture réglable 9 est piloté à partir de la pression régnant dans la chambre de détente 12. Ainsi quand ladite pression est plus haute qu'une valeur prédéterminée, un échange de fluides entre la chambre de compression 13 et la chambre de compensation 7 est initié.

Pour ce faire, par rapport à un amortisseur commun, deux conduite 15, 16 et un canal 10 sont aménagés. La première permet le passage de fluide entre la chambre de compression 13 et la pièce rainurée 17. La seconde est utilisée pour déplacer le fluide entre la pièce rainurée 17 et la chambre de compensation 7. le dernier, situé dans l'exemple illustré entre l'intérieur du corps 4 et le réservoir cylindrique 7b de la chambre de compensation 7, permet de mettre en contact direct le fluide contenu dans la chambre de détente 12 et une face de la pièce rainurée 17. Dans l'exemple illustré à la figure 2, on peut voir que le canal 10 comporte une première partie 10a creusée dans le bouchon 5 et une deuxième partie 10b contenue dans le corps 4 et parallèle au deuxième réservoir 7b de la chambre de compensation 7.

Cette dernière est montée solidaire du ressort 18, lui même solidaire du fond du corps 4, de sorte que ledit ressort va s'opposer à une poussée qui serait induite par une augmentation de pression du fluide présent dans le canal 10. La pièce rainurée 17 peut donc uniquement se déplacer sensiblement perpendiculairement par rapport à la longueur du corps 4 dans l'évidemment 19.

Dans sa position de repos, la pièce rainurée 17 est dans la position illustrée dans l'exemple de la figure 4. Cette configuration correspond à une phase où le ressort 18 est dans sa position d'équilibre et où l'amortisseur 1 est statique. Le passage de fluide entre la chambre de compression 13 et la chambre de compensation 7 est fermé.

Dans l'exemple illustré, au moins une rainure 20 de la pièce 17 est oblique pour qu'à une translation prédéterminée de la pièce 17 corresponde un vis-à-vis direct entre la première conduite 15, la rainure 20 et la deuxième conduite 16 comme illustré dans l'exemple de la figure 3. Le passage de fluide entre la chambre de compression 13 et la chambre de compensation 7 est alors ouvert. Cela correspond à un positionnement du ressort 18 sous contrainte, c'est à dire pressé entre le fond du corps 4 et la pièce rainurée 17, et à l'amortisseur 1 dans une phase dynamique, c'est-à-dire en phase de compression ou de détente.

Pendant les phases de compression, la pression augmente dans la chambre de détente 12 du fait de l'augmentation de volume due à l'enfoncement de la tige 2 à l'intérieur du corps 4. le fluide présent dans la chambre de détente 12 et alimentant le canal 10 va fournir une pression suffisante pour pousser la pièce rainurée 17. Le passage de fluide de la chambre de compression 13 vers la chambre de compensation 7 est alors possible et la compensation, consistant à enlever le volume de fluide correspondant au volume de tige rentrée, peut avoir lieue.

Pendant les phases de détente, la pression augmente dans la chambre de détente 12 du fait du rapprochement du piston 3 vers le bouchon 5 dû, à la sortie de la tige 2 vers l'extérieur du corps 4. le fluide présent dans la chambre de détente 12 et alimentant le canal 10 va fournir une pression suffisante pour pousser la pièce rainurée 17. Le passage de fluide de la chambre de compensation 7 vers la chambre de compression 13 est alors possible. De plus, le clapet 14, déformé par l'aspiration dudit piston, va également permettre ce passage en utilisant le canal 8.

La compensation, consistant à rajouter le volume de fluide correspondant au volume de tige sortie, peut avoir lieue avec un plus fort débit que lors de la phase de compression.

Bien entendu, la présente invention ne se limite pas à l'exemple illustré mais est susceptible de diverses variantes et modifications qui apparaîtront à l'homme de l'art. En particulier, le canal 10 peut avoir une configuration différente. De même, le dispositif d'ouverture réglable peut être différent en ce que, par exemple, la pièce rainurée 17 peut être remplacée par une pièce trouée.

## Revendications

1. Amortisseur hydraulique (1) à compensation adaptable comprenant un corps (4) sensiblement cylindrique et fermé à une extrémité, une tige (2), un piston (3) qui, solidaire d'une extrémité de ladite tige, glisse le long de la surface intérieure dudit corps et sépare l'intérieur dudit corps en une chambre de détente et une chambre de compression (12, 13), des moyens de fermeture (5) dudit corps laissant traverser la tige (2) vers l'extérieur du corps de manière étanche, des moyens d'ouverture sélective entre lesdites deux chambres situés dans le piston et une chambre de compensation (7) qui, reliée à la chambre de compression (13) par un premier canal (8) autorisant, grâce à un clapet anti-retour (14), le passage d'éléments hydrauliques uniquement de ladite chambre de compensation vers ladite chambre de compression formée entre ledit piston et le fond du corps, sert de réserve d'éléments hydrauliques pour pallier la différence de volume de ladite tige **caractérisé en ce qu'**il comporte en plus un dispositif d'ouverture réglable (9) piloté à partir de la pression régnant dans la chambre de détente (12) formée entre ledit piston et lesdits moyens de fermeture permettant, lors des phases de détente et de compression, d'équilibrer les compensations en volume de fluide.

2. Amortisseur (1) selon la revendication 1, **caractérisé en ce que** le dispositif d'ouverture réglable (9) autorise sélectivement la communication entre les chambres de compensation (7) et de compression (13) et comporte un deuxième canal (10) reliant ladite chambre de détente à l'organe de pilotage (17) dudit dispositif d'ouverture réglable permettant d'adapter la compensation pour éviter le désamorçage dudit amortisseur.

3. Amortisseur (1) selon la revendication 2, **caractérisé en ce que** ledit dispositif d'ouverture réglable comporte une pièce rainurée (17) qui, montée sur un ressort (18) solidaire dudit amortisseur, est déplacé suivant la poussée induite par la pression régnant dans ledit deuxième canal de manière à faire correspondre lesdites rainures avec au moins deux conduites (15, 16) débouchant respectivement dans la chambre de compression (13) d'une part et dans la chambre de compensation (7) d'autre part en vue d'utiliser le creux des rainures (20) pour le passage d'éléments hydrauliques entre les deux chambres précédemment citées.

4. Amortisseur (1) selon la revendication 2 ou 3, **caractérisé en ce que** ledit deuxième canal est formé par un évidement (10a) réalisé dans le moyen de fermeture (5) puis dans l'épaisseur du corps (4) jusqu'audit dispositif d'ouverture réglable permettant de réaliser un ensemble monobloc sans élément extérieur audit corps.

## Patentansprüche

1. Hydraulischer Dämpfer (1) mit einstellbarer Kompensation, mit einem im Wesentlichen zylindrischen und an einem Ende geschlossenen Körper (4), einer Stange (2), einem Kolben (3), der - fest verbunden mit einem Ende der Stange - an der Innenfläche des Körpers entlanggleitet und dessen Inneres in eine Entspannungskammer und eine Kompressionskammer (12, 13) teilt, Mitteln (5) zum Verschließen des Körpers, welche die Stange (2) auf dichte Weise aus dem Körper ausfahren lassen, im Kolben angeordneten Mitteln zum selektiven Öffnen der beiden Kammern und einer Kompensationskammer (7), die - mit der Kompressionskammer (13) über einen ersten Kanal (8) verbunden, der mittels eines Rückschlagventils (14) den Durchgang hydraulischer Elemente nur von der Kompensationskammer in die Kompressionskammer zwischen dem Kolben und dem Boden des Körpers erlaubt - als Reserve hydraulischer Elemente zum Ausgleich des Volumenunterschieds der Stange dient, **dadurch gekennzeichnet, dass** er außerdem eine einstellbare Öffnungsvorrichtung (9) aufweist, die von dem in der Entspannungskammer (12) zwischen dem Kolben und den Schließmitteln herrschenden Druck gesteuert wird und es bei den Entspannungs- und Kompressionsphasen erlaubt, die Kompensationen an Fluidvolumen im Gleichgewicht zu halten.

2. Dämpfer (1) nach Anspruch 1, **dadurch gekennzeichnet, dass** die einstellbare Öffnungsvorrichtung (9) die wahlweise Verbindung zwischen der Kompensationskammer (7) und der Kompressionskammer (13) erlaubt und einen zweiten Kanal (10) aufweist, der die Entspannungskammer mit dem Steuerorgan (17) der einstellbaren Öffnungsvorrichtung verbindet, was die Anpassung der Kompensation erlaubt, um das Aussetzen des Dämpfers zu verhindern.

3. Dämpfer (1) nach Anspruch 2, **dadurch gekennzeichnet, dass** die einstellbare Öffnungsvorrichtung ein gerilltes Teil (17) aufweist, das - auf einer mit dem Dämpfer fest verbundenen Feder (18) montiert - abhängig von dem Schub bewegt wird, der durch den im zweiten Kanal herrschenden Druck erzeugt wird, sodass die Rillen mit mindestens zwei Leitungen (15, 16) in Übereinstimmung gebracht werden, die in die Kompressionskammer (13) beziehungsweise in die Kompensationskammer (7) münden, um den Hohlraum der Rillen (20) für den Durchgang hydraulischer Elemente zwischen den beiden genannten Kammern zu nutzen.

4. Dämpfer (1) nach Anspruch 2 oder 3, **dadurch gekennzeichnet, dass** der zweite Kanal durch eine Aussparung (10a) im Schließmittel (5) und dann in der Dicke des Körpers (4) bis zur einstellbaren Öffnungsvorrichtung gebildet ist, was es erlaubt, eine Einheit aus einem Stück ohne Element außerhalb des Körpers herzustellen.

## Claims

1. Hydraulic shock absorber (1) with adaptable compensation comprising a substantially cylindrical body (4), closed at one end, a rod (2), a piston (3) which, being integral with one end of said rod, slides along the inner surface of said body and separates the inside of said body into an expansion chamber and a compression chamber (12, 13), means (5) for closing said body allowing the rod (2) to pass towards the outside of the body in a sealed manner, opening means selective between said two chambers located in the piston and a compensation chamber (7) which, being connected to the compression chamber (13) by a first channel (8) that, by means of a non-return valve (14), allows the passage of hydraulic elements solely from said compensation chamber towards said compression chamber formed between said piston and the bottom of the body, is used as a hydraulic element reserve in order to mitigate the difference in volume of said rod, **characterised in that** it also comprises an adjustable opening device (9) controlled on the basis of the pressure prevailing in the expansion chamber (12) formed between said piston and said closing means making it possible to balance fluid volume compensation during the expansion and compression phases.

2. Shock absorber (1) according to Claim 1, **characterised in that** the adjustable opening device (9) selectively allows communication between the compression (7) and compensation chambers (13) and comprises a second channel (10) connecting said expansion chamber to the control member (17) of said adjustable opening device making it possible to adapt the compensation in order to prevent the unpriming of said shock absorber.

3. Shock absorber (1) according to Claim 2, **characterised in that** said adjustable opening device comprises a grooved part (17) that, being mounted on a spring (18) integral with said shock absorber, is displaced in the direction of the thrust induced by the pressure prevailing in said second channel so as to cause said grooves to correspond with at least two conduits (15, 16) emerging respectively in the compression chamber (13) on the one hand and in the compensation chamber (7) on the other hand with a view to using the hollow of the grooves (20) for the passage of hydraulic elements between the aforementioned two chambers.

4. Shock absorber (1) according to Claim 2 or 3, **characterised in that** said second channel is formed by a recess (10a) produced in the closing means (5) then in the thickness of the body (4) as far as said adjustable opening device making it possible to produce a single-piece assembly with no element external to said body.
